# EUROPÄISCHE PATENTANMELDUNG

(11) **EP 4 749 859 A1**
(43) Veröffentlichungstag der Anmeldung: **27.05.2026**
(21) Anmeldenummer: 25211343.6
(22) Anmeldetag: 27.10.2025
(51) Int. Cl.: H02H 3/20

(54) **SCHUTZSCHALTUNG ZUR ÜBERSPANNUNGSBEGRENZUNG AN EINER ELEKTRISCHEN BAUGRUPPE**

(30) Priorität: 25.11.2024 DE 102024134635
(71) Anmelder: STILL GmbH, 22113 Hamburg (DE)
(72) Erfinder: Hopfmüller, Lorenz, 20535 Hamburg (DE)
(74) Vertreter: Patentship Patentanwaltgesellschaft

(57) **Zusammenfassung**

Die Erfindung betrifft eine Schutzschaltung zur Überspannungsbegrenzung an einer elektrischen Baugruppe, die über einen Leistungsschalter an einen Versorgungsspannungsanschluss schaltbar ist. Die Schutzschaltung umfasst einen Bipolartransistor mit einer Basis, einem Emitter und einem Kollektor, wobei der Emitter beim Betreiben der Schutzschaltung an den Versorgungsspannungsanschluss und der Kollektor an einen Steueranschluss des Leistungsschalters geschaltet ist. Die Schutzschaltung umfasst ein Schwellwertelement, das an die Basis des Bipolartransistors geschaltet ist, und ausgebildet ist, beim Auftreten einer Überspannung an dem Versorgungsspannungsanschluss stromleitend zu werden, so dass der Bipolartransistor einen Basisstrom und damit auch einen Emitter-Kollektor-Strom führt, der den Steueranschluss des Leistungsschalters ansteuert, die elektrische Baugruppe von dem Versorgungsspannungsanschluss zu trennen.

## Beschreibung

Die Erfindung betrifft das Gebiet der elektronischen Leistungsschalter und Halbleiterschalter zur Überspannungsbegrenzung. Die Erfindung betrifft eine Schutzschaltung zur Überspannungsbegrenzung an einer elektrischen oder elektronischen Baugruppe. Insbesondere betrifft die Erfindung eine Methode zur schnellen Überspannungserkennung und -Abschaltung am Eingang einer Baugruppe.

Im Bordnetz eines Fahrzeuges können aus vielerlei Gründen Überspannungs-Transienten auftreten, zum Beispiel: Plötzlicher Lastabwurf; Batterieverlust unter Rückspeisung oder beim Laden. Diese Transienten können weit über der maximalen Betriebsspannung (Ladeschlussspannung der Batterie) liegen. Zum Beispiel können in einem 24V-Bordnetz Transienten von bis zu 80V oder mehr auftreten.

Diese Überspannung betrifft in der Baugruppe all diejenigen Schaltkreise, die an Batteriespannung verbunden sind. Darunter fällt zum Beispiel das Schaltnetzteil zur internen Spannungsversorgung der Baugruppe. Am Schaltnetzteil ist oft ein PFET (P-Kanal Feldeffekttransistor) als Einschaltstrom-Begrenzer und Eingangsschalter vorgeschaltet.

Derzeit existieren zwei bekannte Möglichkeiten bzw. Technologien oder Methoden zum Umgang mit transienten Überspannungsereignissen im Bordnetz. Bei der ersten Möglichkeit, hier mit "Durchgängig Überspannungsfest" bezeichnet, werden alle Bestandteile der Baugruppe mit Kontakt zur Bordnetzspannung so ausgelegt, dass sie die maximal erwartete transiente Eingangs-Überspannung aushalten. Bei der zweiten Möglichkeit, hier mit "Messen und Abschalten" bezeichnet, erfolgt ein Erfassen der Eingangsspannung mit bekannter Technologie, und ein Vergleichen auf einen Schwellwert und Abschalten eines Eingangsschalters bei Überschreitung. Beide Methoden sind Standard-Vorgehen. Zur zweiten Methode "Messen und Abschalten" existieren auch integrierte Bausteine, diese sind unter dem Namen "Hot Swap Controller" oder "Smart Fuse" bzw. "eFuse" bekannt.

Die erste Methode "Durchgängig Überspannungsfest" hat die folgenden Nachteile: Bisher wird das Schaltnetzteil oft so ausgelegt, dass es am Eingang die maximal erwartete transiente Überspannung aushält. Das ist teuer, erfordert erheblichen zusätzlichen Entwicklungs- und Testaufwand, und schmälert die Auswahl an zur Verfügung stehenden Schaltnetzteil-Komponenten erheblich.

Die zweite Methode "Messen und Abschalten" hat die folgenden Nachteile: Es sind erhebliche zusätzliche Schaltungsaufwände nötig. Es ist kompliziert und aufwendig, die Messung der Eingangsspannung, Vergleich auf Schwellwert und Abschaltung so schnell durchzuführen, dass die Abschaltung erfolgt, bevor durch die Transiente ein Schaden entsteht. Integrierte Bausteine (hot swap controller, e-Fuse) sind ihrerseits in der maximalen Eingangsspannung begrenzt und für hohe Eingangsspannungen teuer und schlecht verfügbar.

Der vorliegenden Erfindung liegt die Aufgabe zugrunde, eine kosteneffiziente, schnelle und zuverlässige Lösung zur Überspannungsbegrenzung an einer elektrischen oder elektronischen Baugruppe zu schaffen, die mit geringem Bauteil- und Schaltungsaufwand realisierbar ist.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

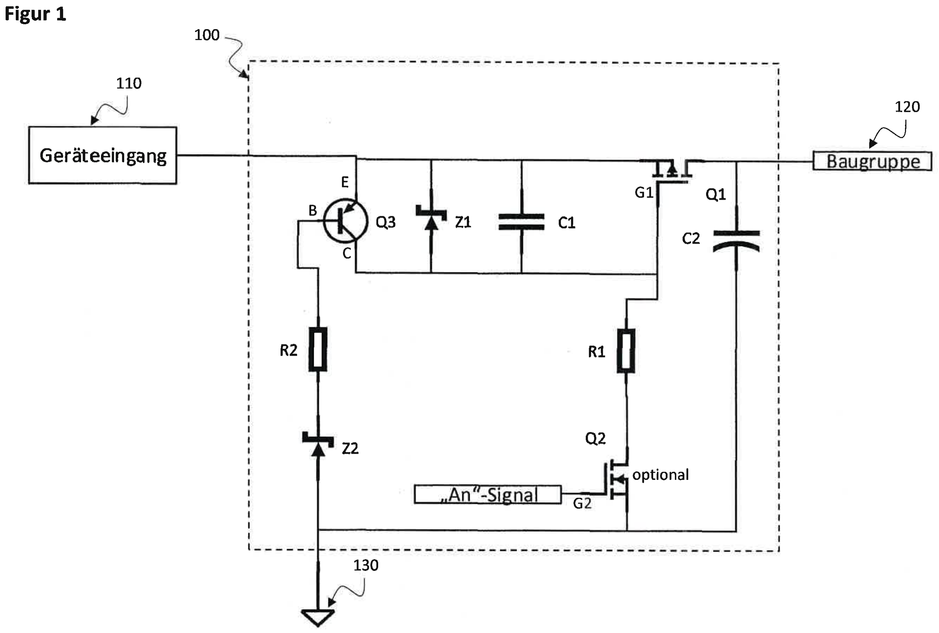

Die erfinderische Lösung basiert auf einer neuartigen Überspannungsbegrenzung, die im Folgenden mit Bezugnahme auf die Schaltungselemente der Figur 1 näher dargestellt ist.

Das übliche Netzwerk zur Einschaltstrombegrenzung enthält keine Überspannungsbegrenzung. Eine Überspannung am Geräteeingang würde direkt auch an der Baugruppe anliegen und könnte dort Schäden verursachen. Das Konzept der hier offenbarten neuartigen Überspannungsbegrenzung ist wie folgt (siehe Schaltungselemente in Figur 1):
Wenn keine Überspannung vorliegt, ist die Basis an Q3 auf dem gleichen Potential wie der Geräteeingang. Z2 wird so ausgelegt, dass in diesem Zustand kein Strom durch Z2 fließt. Q3 führt damit keinen Basisstrom, somit auch keinen Emitterstrom und beeinflusst die Schaltung nicht.

Wenn Überspannung vorliegt, ist Z2 im Durchbruch und beginnt zu leiten. Durch R2, Z2 fließt ein Strom. Q3 führt damit einen Basisstrom. Das Potential an der Basis von Q3 liegt eine Emitter-Basis-Spannung unter dem Potential des Geräteeingangs. Durch den Basisstrom an Q3 wird ein Emitter-Kollektor-Strom verursacht. Hierdurch wird die in C1 gespeicherte Ladung rasch abgebaut, und das Gate von Q1 liegt auf Source-Potential. Q1 hört auf zu leiten, und die Baugruppe wird vor der Eingangs-Überspannung geschützt.

Wenn die Überspannung nicht mehr vorliegt, hört Q3 auf zu leiten, C1 lädt sich durch R1, Q2 wieder auf und Q1 beginnt wieder zu leiten. Es findet also eine automatische Rückstellung statt.

Mit der hier vorgestellten neuartigen Überspannungsbegrenzung können die folgenden technischen Vorteile erzielt werden:
1) Gegenüber der oben beschriebenen Methode "Durchgängig Überspannungsfest": Die Komponenten in der Baugruppe werden vor Überspannung geschützt. Dadurch kann die Komplexität verringert werden. Die Kosten sind geringer, es können günstigere Bauteile mit kleinerer Spannungsfestigkeit eingesetzt werden. Die Bauteilauswahl ist höher, denn für kleinere Spannungen sind mehr Bauteile verfügbar.
2) Gegenüber der oben beschriebenen Methode "Messen und Abschalten": Es kommt zu einer deutlich schnelleren Abschaltung bei Überspannung. Der schaltungstechnische Aufwand ist kleiner und die Komplexität ist geringer. Durch Einsatz von diskreten Bauelementen kann eine versorgungssichere Schaltung realisiert werden. Es kommt zu keiner "Single-Source-Abhängigkeit".

Mit der hier vorgestellten neuartigen Überspannungsbegrenzung können die Entwicklungskosten gesenkt werden, da eine Überspannung bereits am Eingang einer Baugruppe abgeschaltet werden kann und so die detaillierte Betrachtung des Überspannungsverhaltens aller folgenden Schaltkreise entfallen kann.

Durch den Einsatz der hier beschriebenen Schutzschaltung kann die benötigte Maximalspannung auch an weiteren Bestandteilen der Baugruppe gesenkt werden, so dass Einsparungen beispielsweise im einstelligen Euro-Bereich erzielt werden können.

Gemäß einem ersten Aspekt der Erfindung wird die oben beschriebene Aufgabe gelöst durch eine Schutzschaltung zur Überspannungsbegrenzung an einer elektrischen Baugruppe, die über einen Leistungsschalter an einen Versorgungsspannungsanschluss schaltbar ist, wobei die Schutzschaltung folgendes umfasst: einen Bipolartransistor, insbesondere Kleinsignal-Bipolartransistor mit einer Basis, einem Emitter und einem Kollektor, wobei der Emitter beim Betreiben der Schutzschaltung an den Versorgungsspannungsanschluss und der Kollektor an einen Steueranschluss des Leistungsschalters geschaltet ist; und ein Schwellwertelement, das an die Basis des Bipolartransistors geschaltet ist, und ausgebildet ist, beim Auftreten einer Überspannung an dem Versorgungsspannungsanschluss stromleitend zu werden, so dass der Bipolartransistor einen Basisstrom und damit auch einen Emitter-Kollektor-Strom führt, der den Steueranschluss des Leistungsschalters ansteuert, die elektrische Baugruppe von dem Versorgungsspannungsanschluss zu trennen.

Damit kann auf effiziente Weise eine Überspannungsbegrenzung an der elektrischen Baugruppe implementiert werden, so dass diese vor gefährlichen Spannungen geschützt ist. Die Sicherheit der elektrischen Baugruppe ist damit gewährleistet.

Die Schutzschaltung kann in vorteilhafter Weise insbesondere in einem Fahrzeug, zum Beispiel einem Flurförderzeug eingesetzt werden, um die elektrischen Baugruppen des Fahrzeugs vor Überspannung zu schützen. Der Versorgungsspannungsanschluss kann hier die Batteriespannung sein, beispielsweise die Batteriespannung einer Blei- oder Lithium-Ionen-Batterie mit Nennspannung von beispielsweise 24V, 48V oder 80V. Insbesondere aufgrund ihrer kostengünstigen Realisierung kann die Schutzschaltung in der Serienfertigung einer Vielzahl von Fahrzeugen kosteneffizient eingesetzt werden.

Gemäß einer beispielhaften Ausführungsform der Schutzschaltung ist der Bipolar-Transistor ein PNP-Transistor, d.h., ein Bipolar-Transistor vom Typ PNP. Der PNP-Transistor besteht aus zwei p-leitenden Schichten. Dazwischen liegt eine dünne n-leitende Schicht.

Gemäß einer beispielhaften Ausführungsform der Schutzschaltung führt in einem Normalbetrieb, in dem keine Überspannung an dem Versorgungsspannungsanschluss vorliegt, der Bipolartransistor keinen Basisstrom und damit auch keinen Emitter-Kollektor-Strom und hat somit keinen Einfluss auf den Leistungsschalter.

Dies hat den Vorteil, dass der Bipolartransistor im Normalbetrieb quasi nicht sichtbar ist und keine Auswirkungen auf das Schaltverhalten hat.

Gemäß einer beispielhaften Ausführungsform der Schutzschaltung ist das Schwellwertelement eine Zener-Diode, wobei eine Durchbruchsspannung der Zener-Diode eine Spannungsschwelle bestimmt, welche ein Auftreten der Überspannung festlegt.

Zener-Dioden sind so konstruiert, dass sie eine sehr genaue Durchbruchspannung haben, die sogenannte Zener-Durchbruchsspannung oder Zener-Spannung. Mit einer solchen Zener-Diode kann das Verhalten der Schutzschaltung bei Überspannung sehr genau festgelegt werden.

Gemäß einer beispielhaften Ausführungsform der Schutzschaltung umfasst die Schutzschaltung einen Schutzwiderstand, der zwischen das Schwellwertelement und die Basis des Bipolartransistors geschaltet ist, wobei der Schutzwiderstand ausgebildet ist, die Basis vor einem Überstrom zu schützen.

Mit einem solchen Schutzwiderstand kann in vorteilhafter Weise der Strom begrenzt werden, der durch die Zener-Diode fließt und somit die Zener-Diode gegen Zerstörung geschützt werden.

Gemäß einer beispielhaften Ausführungsform der Schutzschaltung umfasst die Schutzschaltung eine Einschaltstrombegrenzungsschaltung, die ausgebildet ist, beim Verbinden der elektrischen Baugruppe mit dem Versorgungsspannungsanschluss über den Leistungsschalter einen Einschaltstrom entsprechend einer Zeitkonstante zu begrenzen.

Zusätzlich zur Überspannungsbegrenzung kann mit einer solchen Einschaltstrombegrenzungsschaltung auch der maximale Strom, der beim Einschalten bzw. Anschließen der elektronischen Baugruppe an die Versorgungsspannung fließt, in geeigneter Weise begrenzt werden, so dass die Baugruppe vor Überstrom geschützt ist und nicht zerstört wird.

Gemäß einer beispielhaften Ausführungsform der Schutzschaltung umfasst die Einschaltstrombegrenzungsschaltung den Leistungsschalter sowie einen ersten Widerstand und einen ersten Kondensator, aus denen sich die Zeitkonstante bestimmt.

Ein solches RC-Glied ist einfach und kostengünstig herstellbar und kann eine Zeitkonstante bzw. Verzögerungszeit präzise und robust bereitstellen.

Gemäß einer beispielhaften Ausführungsform der Schutzschaltung ist der erste Kondensator beim Betreiben der Schutzschaltung zwischen den Versorgungsspannungsanschluss und den Steueranschluss des Leistungsschalters geschaltet; und der erste Widerstand ist beim Betreiben der Schutzschaltung zwischen den Steueranschluss des Leistungsschalters und einen Referenzspannungsanschluss, beispielsweise Masse, geschaltet.

Damit kann auf vorteilhafte Weise die Zeitkonstante, mit der der Einschaltstrom begrenzt wird, festgelegt werden.

Gemäß einer beispielhaften Ausführungsform der Schutzschaltung umfasst die Schutzschaltung einen zweiten Kondensator, der beim Betreiben der Schutzschaltung zwischen die Baugruppe und den Referenzspannungsanschluss geschaltet ist; wobei die Einschaltstrombegrenzungsschaltung ausgebildet ist, den zweiten Kondensator beim Verbinden der elektrischen Baugruppe mit dem Versorgungsspannungsanschluss über den Leistungsschalter mit einem begrenzten Eingangsstrom zu laden.

Der zweite Kondensator dient zur Spannungsstabilisierung an der Baugruppe und zur Glättung des Stromverlaufs am Geräteeingang, und kann aufgrund der Einschaltstrombegrenzungsschaltung langsam geladen werden.

Gemäß einer beispielhaften Ausführungsform der Schutzschaltung ist die Einschaltstrombegrenzungsschaltung ausgebildet, beim Verbinden der elektrischen Baugruppe mit dem Versorgungsspannungsanschluss über den Leistungsschalter einen Stromfluss durch den ersten Widerstand zuzulassen, so dass eine über dem ersten Kondensator abfallende Spannung mit der Zeitkonstante ansteigt und den Steueranschluss des Leistungsschalters veranlasst, den Leistungsschalter zu öffnen.

Damit lässt sich auf einfache Weise beim Auftreten einer Überspannung, welche zu einem Basisstrom im Bipolartransistor führt, der über den ersten Widerstand abfließt, über den entsprechend verstärkten Emitter-Kollektor-Strom der erste Kondensator entladen und der Leistungsschalter abschalten, so dass die Baugruppe schnell und effizient gegen Überspannung geschützt werden kann.

Gemäß einer beispielhaften Ausführungsform der Schutzschaltung umfasst die Einschaltstrombegrenzungsschaltung einen Halbleiterschalter, der zwischen den ersten Widerstand und den Referenzspannungsanschluss geschaltet ist; wobei der Halbleiterschalter ausgebildet ist, die Einschaltstrombegrenzungsschaltung zu aktivieren.

Der Halbleiterschalter (Q2) ist optional. Bei der Schutzschaltung ohne den Halbleiterschalter wird die Einschaltstrombegrenzung aktiv, sobald am Geräteeingang Spannung liegt. Der zweite Kondensator (C2) wird sofort mit begrenztem Strom geladen. Bei der Schutzschaltung mit dem Halbleiterschalter Q2 wird die Einschaltstrombegrenzung erst aktiv, wenn das "An"-Signal (siehe Figur 1) aktiv wird. Bis dahin fließt kein Strom durch Q1 in C2.

Der Halbleiterschalter kann beispielsweise als Feldeffekttransistor, insbesondere MOSFET ausgebildet sein. Alternativ kann der Halbleiterschalter auch als IGBT oder Bipolartransistor ausgebildet sein. Solche Feldeffekttransistoren sind leicht erhältlich und können in den erforderlichen Stückzahlen beim Einsatz der Schutzschaltung im Fahrzeug oder in anderen Anwendungen gefertigt werden.

Gemäß einer beispielhaften Ausführungsform der Schutzschaltung umfasst die Einschaltstrombegrenzungsschaltung eine Zener-Diode, die parallel zu dem ersten Kondensator geschaltet ist; wobei die Zenerdiode ausgebildet ist, einen Spannungsabfall zwischen dem Versorgungsspannungs-anschluss und dem Steueranschluss des Leistungsschalters zu begrenzen.

Die Zener-Diode kann damit in vorteilhafter Weise den Spannungsabfall zwischen dem Versorgungsspannungsanschluss und dem Steueranschluss des Leistungsschalters begrenzen, so dass es zu keiner Zerstörung oder Beschädigung des Leistungsschalters aufgrund eines zu hohen Spannungsabfalls kommt.

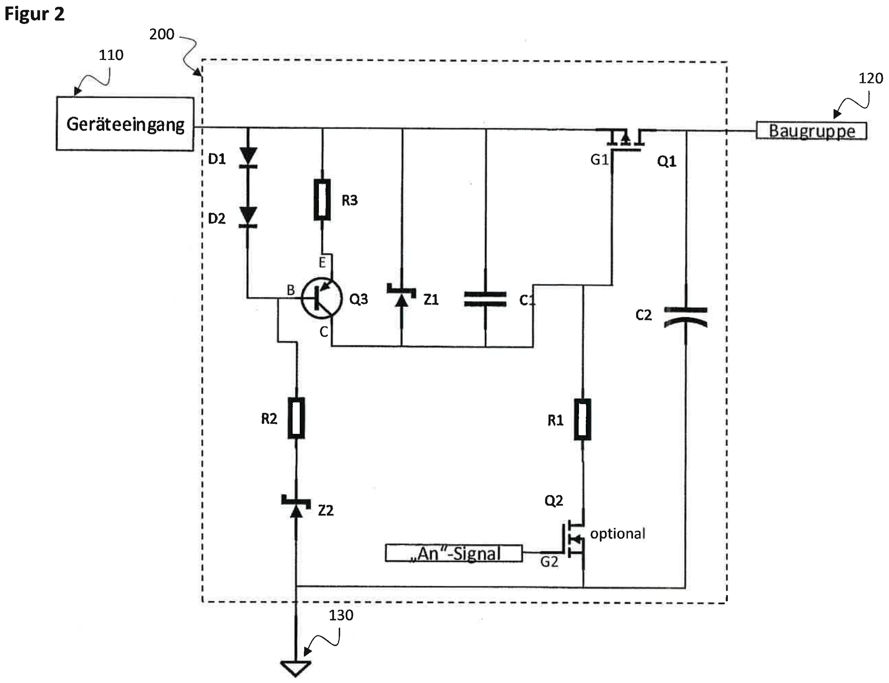

Gemäß einer beispielhaften Ausführungsform der Schutzschaltung umfasst die Schutzschaltung ein Strombegrenzungselement, das zwischen den Versorgungsspannungsanschluss und den Bipolartransistor (Q3, siehe Figur 2) geschaltet ist, und ausgebildet ist, einen Basisstrom sowie einen Emitterstrom an dem Bipolartransistor zu begrenzen.

Mit diesem Strombegrenzungselement lässt sich der maximale Emitter- und Basisstrom am Bipolartransistor begrenzen, so dass aufgrund des geringeren Stroms eine größere Typenauswahl von Bipolartransistoren zum Einsatz in der Schutzschaltung zur Verfügung steht.

Gemäß einer beispielhaften Ausführungsform der Schutzschaltung umfasst das Strombegrenzungselement folgendes: mehrere in Serie geschaltete Dioden, die zwischen den Versorgungsspannungsanschluss und die Basis des Bipolartransistors geschaltet sind; und einen Widerstand, der zwischen den Versorgungsspannungsanschluss und den Emitter des Bipolartransistors geschaltet ist.

Durch die Vorwärtsspannung der Dioden sowie über den Spannungsabfall an dem Widerstand kann der maximale Emitter- und Basisstrom durch den Bipolartransistor auf einfache Weise begrenzt werden, so dass ein günstigerer Bipolartransistor mit geringeren Anforderungen verwendet werden kann.

Gemäß einer beispielhaften Ausführungsform der Schutzschaltung ist die Schutzschaltung ausgebildet, an einen Eingang oder einen Ausgang der elektrischen Baugruppe geschaltet zu werden oder an weitere Schaltkreise innerhalb der Baugruppe.

Damit lassen sich die Anforderungen an die Spannungsfestigkeit der elektrischen Baugruppen reduzieren, so dass diese kostengünstiger gefertigt werden können.

Gemäß einem zweiten Aspekt der Erfindung wird die oben beschriebene Aufgabe gelöst durch ein Verfahren zur Überspannungsbegrenzung an einer elektrischen Baugruppe, die über einen Leistungsschalter an einen Versorgungsspannungsanschluss schaltbar ist, wobei die Schutzschaltung einen Bipolartransistor, insbesondere einen Kleinsignal-Bipolartransistor, mit einer Basis, einem Emitter und einem Kollektor umfasst, wobei der Emitter beim Betreiben der Schutzschaltung an den Versorgungsspannungsanschluss und der Kollektor an einen Steueranschluss des Leistungsschalters geschaltet ist; und wobei die Schutzschaltung ein Schwellwertelement umfasst, das an die Basis des Bipolartransistors geschaltet ist, und ausgebildet ist, beim Auftreten einer Überspannung an dem Versorgungsspannungsanschluss stromleitend zu werden; wobei das Verfahren folgende Schritte umfasst: Verbinden der Baugruppe mit dem Versorgungsspannungsanschluss mittels des Leistungsschalters; und Trennen der Baugruppe von dem Versorgungsspannungsanschluss beim Auftreten einer Überspannung an dem Versorgungsspannungsanschluss, bei dem das Schwellwertelement stromleitend wird, so dass der Bipolartransistor einen Basisstrom und damit auch einen Emitter-Kollektor-Strom führt, der den Steueranschluss des Leistungsschalters ansteuert, die elektrische Baugruppe von dem Versorgungsspannungsanschluss zu trennen.

Mit einem solchen Verfahren kann auf effiziente Weise eine Überspannungsbegrenzung an der elektrischen Baugruppe implementiert werden, so dass diese vor gefährlichen Spannungen geschützt ist. Die Sicherheit der elektrischen Baugruppe ist damit gewährleistet.

Gemäß einer beispielhaften Ausführungsform des Verfahrens erfolgt das Verbinden der Baugruppe mit dem Versorgungsspannungsanschluss in einem Normalbetriebszustand, in dem keine Überspannung an dem Versorgungsspannungsanschluss vorliegt, so dass der Bipolartransistor keinen Basisstrom und damit auch keinen Emitter-Kollektor-Strom führt und somit keinen Einfluss auf den Leistungsschalter hat.

Dies hat den Vorteil, dass der Bipolartransistor im Normalbetriebszustand quasi nicht sichtbar ist und keine Auswirkungen auf das Schaltverhalten hat.

Gemäß einem dritten Aspekt der Erfindung wird die oben beschriebene Aufgabe gelöst durch ein Fahrzeug, insbesondere Flurförderzeug, mit: zumindest einer elektrischen Baugruppe; und einer Schutzschaltung gemäß dem oben beschriebenen ersten Aspekt zur Überspannungsbegrenzung an der zumindest einen elektrischen Baugruppe.

Bei einem solchen Fahrzeug mit einer Schutzschaltung gemäß der hier vorgestellten Erfindung kann auf effiziente Weise eine Überspannungsbegrenzung an den elektrischen Baugruppen des Fahrzeugs implementiert werden, so dass diese vor gefährlichen Spannungen geschützt sind. Diese Schutzschaltung schützt die Baugruppen vor der Überspannung, indem sie die Überspannung nicht "hineinlässt". Das Fahrzeug kann damit kostengünstiger hergestellt werden, da die Anforderungen an die Spannungsfestigkeit der Baugruppen aufgrund des Einsatzes der Schutzschaltung reduziert werden können. Die Sicherheit des Fahrzeugs wird damit erhöht.

Weitere Vorteile und Einzelheiten der Erfindung werden anhand der in den schematischen Figuren dargestellten Ausführungsbeispiele näher erläutert. Hierbei zeigen:
- Figur 1:: ein Schaltbild einer erfindungsgemäßen Schutzschaltung 100 zur Überspannungsbegrenzung an einer elektrischen Baugruppe gemäß einer ersten Ausführungsform;
- Figur 2:: ein Schaltbild einer erfindungsgemäßen Schutzschaltung 200 zur Überspannungsbegrenzung an einer elektrischen Baugruppe gemäß einer zweiten Ausführungsform; und
- Figur 3:: eine schematische Darstellung eines erfindungsgemäßen Verfahrens 300 zur Überspannungsbegrenzung an einer elektrischen Baugruppe.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Ein MOSFET ist ein aktives Bauelement mit mindestens drei Anschlüssen bzw. Terminals: G (Gate bzw. *Steuerelektrode),* D (Drain bzw. *Abfluss),* S (Source bzw. *Quelle).* Bei einigen Bauformen wird ein zusätzlicher Anschluss B (bulk, Substrat) nach außen geführt, der mit der Chiprückseite verbunden ist. Wie andere Feldeffekttransistoren wirkt der MOSFET wie ein spannungsgesteuerter Widerstand, das heißt, über die Gate-Source-Spannung *U*_{GS} kann der Widerstand zwischen Drain und Source *R*_{DS} und somit der Strom *I*_{DS} durch *R*_{DS} um mehrere Größenordnungen geändert werden.

Ein IGBT ist ein Bipolartransistor mit isolierter Gate-Elektrode. Ein IGBT ist in der Lage, einen höheren Wirkungsgrad und Energieeinsparungen für eine Vielzahl von Hochspannungs- und Hochstromanwendungen zu erreichen.

Ein Bipolartransistor besteht aus zwei p-n-Übergängen, wobei jeder p-n-Übergang in Fluss- oder Sperrrichtung geschaltet werden kann. Die üblichste Art der Beschaltung ist der Verstärkungsbereich, dabei ist der Emitter-Basis-Übergang in Flussrichtung und der Basis-Kollektor-Übergang in Sperrrichtung gepolt. Durch einen elektrischen Strom *I*_{B} zwischen Basis und Emitter wird ein stärkerer Strom *I*_{C} zwischen Kollektor und Emitter gesteuert. Das Verhältnis der beiden Ströme, das im Bereich von etwa 4 bis 1000 liegen kann, ist vom Transistortyp und vom Absolutbetrag des Kollektorstroms abhängig und wird als statischer Stromverstärkungsfaktor B bezeichnet.

Eine Zener-Diode bzw. Z-Diode ist eine Diode, die darauf ausgelegt ist, dauerhaft in Sperrrichtung im Bereich der Durchbruchspannung betrieben zu werden. Die Höhe dieser Durchbruchspannung U_{BR} ist die Hauptkenngröße einer Zener-Diode und ist im Datenblatt spezifiziert. Die Z-Diode wird vor allem zur Spannungsstabilisierung verwendet und sie wird in Sperrrichtung betrieben. Wird eine Z-Diode zur Spannungsstabilisierung verwendet, muss ein Vorwiderstand den Strom begrenzen.

Figur 1 zeigt ein Schaltbild einer erfindungsgemäßen Schutzschaltung 100 zur Überspannungsbegrenzung an einer elektrischen Baugruppe gemäß einer ersten Ausführungsform.

Die Schutzschaltung 100 kann beispielsweise unter anderem die folgenden Schaltelemente umfassen:
- Geräteeingang 110: Eingangsspannung, typischerweise Batteriespannung im Fahrzeug
- Baugruppe 120: Ausgangsspannung dieser Schutzschaltung, typischerweise Eingangsspannung eines Schaltnetzteils
- C2: Großer Kondensator. Beim Einstecken der Baugruppe würde ohne weitere Maßnahmen ein hoher Strom fließen, der andere Baugruppen, zum Beispiel Steckverbinder, Leistungshalbleiter, Sicherungen, beschädigen kann. Daher ist ein Netzwerk zur Einschaltstrombegrenzung notwendig.
- Q1: PFET-Leistungsschalter. Zusammen mit Z1, C1, R1, Q2 bildet er ein übliches Netzwerk zur Einschaltstrombegrenzung, das hier mit Q3, R2, Z2 um eine Überspannungsschutznetzwerk ergänzt wird.
- C1, R1: stellen die Zeitkonstante der Einschaltstrombegrenzung ein.
- Q2: Optional, kann entfallen (dann R1 direkt auf Masse): Mit dem "An-Signal" kann Q1 an- oder ausgeschaltet werden.
- Q3, R2, Z2: Netzwerk zur Überspannungsabschaltung. Durchbruchsspannung der Zener-Diode Z2 stellt die Spannungsschwelle ein. R2 schützt die Basis von Q3 vor Überstrom. Q3 schaltet Q1 aus, wenn eine Überspannung vorliegt.

In einer Minimalkonfiguration kann die Schutzschaltung 100 zumindest die Schaltungselemente Q3 und Z2 umfassen, wie im Folgenden beschrieben.

Die Schutzschaltung 100 dient zur Überspannungsbegrenzung an einer elektrischen Baugruppe 120, die über einen Leistungsschalter Q1 an einen Versorgungsspannungsanschluss 110 schaltbar ist.

Die Schutzschaltung 100 umfasst einen Bipolartransistor Q3, zum Beispiel einen Kleinsignal-Bipolartransistor, mit einer Basis B, einem Emitter E und einem Kollektor C.

Der Emitter E ist beim Betreiben der Schutzschaltung an den Versorgungsspannungsanschluss 110 geschaltet und der Kollektor C ist an einen Steueranschluss G1 des Leistungsschalters Q1 geschaltet.

Die Schutzschaltung 100 umfasst ein Schwellwertelement Z2, das an die Basis B des Bipolartransistors Q3 geschaltet ist, und ausgebildet ist, beim Auftreten einer Überspannung an dem Versorgungsspannungsanschluss 110 stromleitend zu werden, so dass der Bipolartransistor Q3 einen Basisstrom und damit auch einen Emitter-Kollektor-Strom führt, der den Steueranschluss G1 des Leistungsschalters Q1 ansteuert, die elektrische Baugruppe 120 von dem Versorgungsspannungsanschluss 110 zu trennen.

In einem Normalbetrieb, in dem keine Überspannung an dem Versorgungsspannungsanschluss 110 vorliegt, führt der Bipolartransistor Q3 keinen Basisstrom und damit auch keinen Emitter-Kollektor-Strom und hat somit keinen Einfluss auf den Leistungsschalter Q1.

Das Schwellwertelement Z2 ist beispielsweise eine Zener-Diode, wobei eine Durchbruchsspannung der Zener-Diode eine Spannungsschwelle bestimmt, welche ein Auftreten der Überspannung festlegt.

Die Schutzschaltung 100 kann ferner einen Schutzwiderstand R2 umfassen, der zwischen das Schwellwertelement Z2 und die Basis B des Bipolartransistors Q3 geschaltet ist. Der Schutzwiderstand R2 ist ausgebildet, die Basis B vor einem Überstrom zu schützen.

Die Schutzschaltung 100 kann eine Einschaltstrombegrenzungsschaltung Q1, R1, C1, Q2, Z1 umfassen, die ausgebildet ist, beim Verbinden der elektrischen Baugruppe 120 mit dem Versorgungsspannungsanschluss 110 (im Bild als Geräteeingang bezeichnet) über den Leistungsschalter Q1 einen Einschaltstrom entsprechend einer Zeitkonstante zu begrenzen.

Die Einschaltstrombegrenzungsschaltung Q1, R1, C1, Q2, Z1 kann den Leistungsschalter Q1 umfassen sowie einen ersten Widerstand R1 und einen ersten Kondensator C1, aus denen sich die Zeitkonstante bestimmt.

Der erste Kondensator C1 kann beim Betreiben der Schutzschaltung zwischen den Versorgungsspannungsanschluss 110 und den Steueranschluss G des Leistungsschalters Q1 geschaltet sein. Der erste Widerstand R1 kann beim Betreiben der Schutzschaltung zwischen den Steueranschluss G des Leistungsschalters Q1 und einen Referenzspannungsanschluss 130, zum Beispiel Masse, geschaltet sein.

Die Schutzschaltung 100 kann einen zweiten Kondensator C2 umfassen, der beim Betreiben der Schutzschaltung 100 zwischen die Baugruppe 120 und den Referenzspannungsanschluss 130 geschaltet ist. Der zweite Kondensator C2 dient zur Spannungsstabilisierung an der Baugruppe 120 und zur Glättung des Stromverlaufs am Geräteeingang 110. Die Einschaltstrombegrenzungsschaltung Q1, R1, C1, Q2, Z1 kann ausgebildet sein, den zweiten Kondensator C2 beim Verbinden der elektrischen Baugruppe 120 mit dem Versorgungsspannungsanschluss 110 (im Bild als Geräteeingang bezeichnet) über den Leistungsschalter Q1 mit einem begrenzten Eingangsstrom zu laden.

Die Einschaltstrombegrenzungsschaltung Q1, R1, C1, Q2, Z1 kann ausgebildet sein, beim Verbinden der elektrischen Baugruppe 120 mit dem Versorgungsspannungsanschluss 110 (im Bild als Geräteeingang bezeichnet) über den Leistungsschalter Q1 einen Stromfluss durch den ersten Widerstand R1 zuzulassen, so dass eine über dem ersten Kondensator C1 abfallende Spannung mit der Zeitkonstante ansteigt und den Steueranschluss G1 des Leistungsschalters Q1 veranlasst, den Leistungsschalter Q1 zu öffnen.

Die Einschaltstrombegrenzungsschaltung Q1, R1, C1, Q2, Z1 kann einen Halbleiterschalter Q2 umfassen, der zwischen den ersten Widerstand R1 und den Referenzspannungsanschluss 130 geschaltet ist. Der Halbleiterschalter Q2 ist ausgebildet, die Einschaltstrombegrenzungsschaltung Q1, R1, C1, Q2, Z1 zu aktivieren.

Der Halbleiterschalter Q2 wird über seinen Steueranschluss G2 angesteuert, beispielsweise über ein "An"-Signal angeschaltet, wie in Figur 1 dargestellt. Der Halbleiterschalter Q2 ist optional, wenn dieser nicht vorhanden ist, kann der erste Widerstand R1 direkt an den Referenzspannungsanschluss 130, beispielsweise Masse, geschaltet sein.

Die Einschaltstrombegrenzungsschaltung Q1, R1, C1, Q2, Z1 kann eine Zener-Diode Z1 umfassen, die parallel zu dem ersten Kondensator C1 geschaltet ist. Die Zenerdiode Z1 ist ausgebildet, einen Spannungsabfall zwischen dem Versorgungsspannungsanschluss 110 und dem Steueranschluss G1 des Leistungsschalters Q1 zu begrenzen.

Die Schutzschaltung 100 kann ausgebildet sein, an einen Eingang oder einen Ausgang der elektrischen Baugruppe 120 geschaltet zu werden oder an weitere Schaltkreise innerhalb der Baugruppe 120.

Die Schutzschaltung 100 kann in einem Fahrzeug, insbesondere einem Flurförderzeug eingesetzt werden. Ein solches Fahrzeug bzw. Flurförderzeug umfasst zumindest eine elektrische Baugruppe 120 und die oben beschriebene Schutzschaltung 100 zur Überspannungsbegrenzung an der zumindest einen elektrischen Baugruppe 120.

Eine Ausführungsform der Schaltung 100 stellt eine Erweiterung eines industrieüblichen Vorgehens zur Einschaltstrombegrenzung an Baugruppen dar. Eine solche übliche Einschaltstrombegrenzung umfasst die Schaltungselemente C1, Q1, R1, Q2, Z1. Sobald Q2 leitend wird, fließt ein Strom durch R1. Die über C1 abfallende Spannung steigt mit der Zeitkonstante, die sich durch R1, C1 ergibt. Dadurch wird Q1 langsam geöffnet und verweilt im linearen Bereich. Der große Kondensator C2 wird mit begrenztem Eingangsstrom geladen. Z1 begrenzt die Gate-Source-Spannung an Q1.

Während das übliche Netzwerk zur Einschaltstrombegrenzung keine Überspannungsbegrenzung enthält, umfasst die nachfolgend vorgestellte Ausführungsform der Schaltung 100 eine neuartige Überspannungsbegrenzung mit den Schaltungselementen Q3, R2, Z2.

Eine Überspannung am Geräteeingang 110 würde direkt auch an der Baugruppe 120 anliegen und könnte dort Schäden verursachen.

Wenn keine Überspannung vorliegt, ist die Basis an Q3 auf dem gleichen Potential wie der Geräteeingang 110. Z2 wird so ausgelegt, dass in diesem Zustand kein Strom durch Z2 fließt. Q3 führt damit keinen Basisstrom, somit auch keinen Emitterstrom und beeinflusst die Schaltung nicht.

Wenn Überspannung vorliegt, ist Z2 im Durchbruch und beginnt zu leiten. Durch R2, Z2 fließt ein Strom. Q3 führt damit einen Basisstrom. Das Potential an der Basis von Q3 liegt eine Emitter-Basis-Spannung unter dem Potential des Geräteeingangs 110. Durch den Basisstrom an Q3 wird ein Emitter-Kollektor-Strom verursacht. Hierdurch wird die in C1 gespeicherte Ladung rasch abgebaut, und das Gate von Q1 liegt auf Source-Potential. Q1 hört auf zu leiten, und die Baugruppe 120 wird vor der Eingangs-Überspannung geschützt.

Wenn die Überspannung nicht mehr vorliegt, hört Q3 auf zu leiten, C1 lädt sich durch R1, Q2 wieder auf und Q1 beginnt wieder zu leiten. Es findet also eine automatische Rückstellung statt.

Weitere Schaltungselemente zum Schutz von Q3 vor Überstrom an Basis oder Emitter können auslegungstechnisch implementiert werden, beispielsweise entsprechend Figur 2, wie unten dargestellt.

Figur 2 zeigt ein Schaltbild einer erfindungsgemäßen Schutzschaltung 200 zur Überspannungsbegrenzung an einer elektrischen Baugruppe gemäß einer zweiten Ausführungsform.

Die Schutzschaltung 200 umfasst die gleichen Schaltungselemente wie die oben zu Figur 1 beschriebene Schutzschaltung 100 und hat die gleiche Funktion, nämlich Überspannungsbegrenzung an einer elektrischen bzw. elektronischen Baugruppe. Allerdings umfasst die Schutzschaltung 200 gegenüber der Schutzschaltung 100 die folgenden weiteren Schaltelemente: D1, D2, R3, welche ein Strombegrenzungselement darstellen.

Das Strombegrenzungselement D1, D2, R3 ist zwischen den Versorgungsspannungsanschluss 110 und den Bipolartransistor Q3 geschaltet, und ist ausgebildet, einen Basisstrom sowie einen Emitterstrom an dem Bipolartransistor Q3 zu begrenzen.

Das Strombegrenzungselement D1, D2, R3 umfasst mehrere in Serie geschaltete Dioden D1, D2, die zwischen den Versorgungsspannungsanschluss 110 und die Basis B des Bipolartransistors Q3 geschaltet sind; und einen Widerstand R3, der zwischen den Versorgungsspannungsanschluss 110 und den Emitter E des Bipolartransistors Q3 geschaltet ist.

Dies basiert auf dem Prinzip, dass die Vorwärtsspannung einer Diode circa der Basis-Emitter-Spannung eines Bipolartransistors entspricht. Mit einer einzelnen Diode würde die Schaltung nicht funktionieren, denn diese würde einen Basis-Emitter-Strom an Q3 verhindern. Durch die zweite Diode gilt: Über R3 fällt eine Flussspannung der Diode ab, hierdurch wird der Strom durch Q3 begrenzt.

Bei der Schutzschaltung 200 wird durch die Vorwärtsspannung von D1 und D2 sowie über den Spannungsabfall an R3 der maximale Emitter- und Basisstrom an Q3 begrenzt, ohne dass die prinzipielle Funktionsweise der Erfindung sich ändert.

Weitere Ausführungen eines Schutzes von Q3 vor Überstrom können mit dieser Schaltung ebenfalls implementiert werden.

Mit den Schutzschaltungen 100, 200 der Figuren 1 und 2 kann der Schutz einer Baugruppe 120, beispielsweise des Eingangs eines Schaltnetzteils vor Überspannung realisiert werden. Daneben können auch weitere Schaltkreise innerhalb der Baugruppe 120 mit dieser Schaltung 100, 200 vor Batterie-Überspannung geschützt werden. Ebenso kann die hier beschriebene Schutzschaltung bzw. Methode zum Schutz von Ausgängen der Baugruppe 120 verwendet werden, sodass eine Überspannung am Eingang der betrachteten Baugruppe 120 nicht zum Schaden von weiteren Baugruppen führen kann, die an Ausgängen der betrachteten Baugruppe angeschlossen sind. Hierdurch müssen die weiteren Baugruppen nur für eine kleinere Spannungsfestigkeit ausgelegt werden, was erheblich Aufwände und Kosten sparen kann.

Mit der hier vorgestellten neuartigen Schaltung 100, 200 zur Überspannungsbegrenzung können die Entwicklungskosten gesenkt werden, da eine Überspannung bereits am Eingang einer Baugruppe abgeschaltet werden kann und so die detaillierte Betrachtung des Überspannungsverhaltens aller folgenden Schaltkreise entfallen kann. Durch den Einsatz der hier beschriebenen Schutzschaltung 100, 200 kann die benötigte Maximalspannung auch an weiteren Bestandteilen der Baugruppe gesenkt werden, so dass signifikante Einsparungen erzielt werden können.

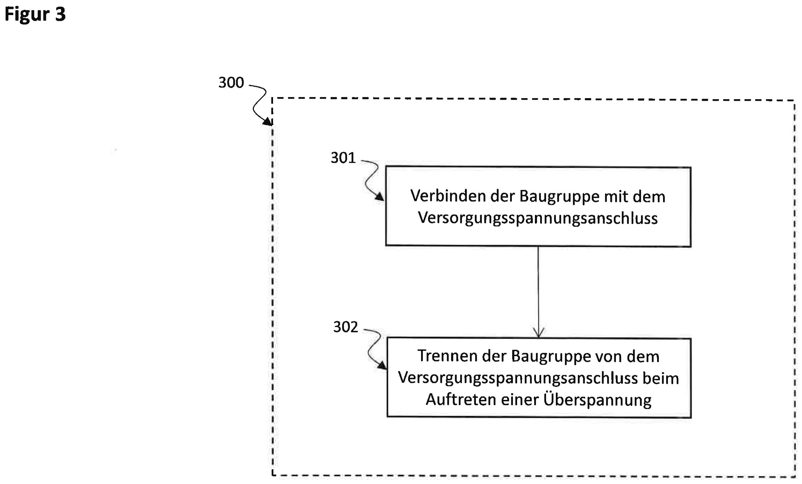

Figur 3 zeigt eine schematische Darstellung eines erfindungsgemäßen Verfahrens 300 zur Überspannungsbegrenzung an einer elektrischen Baugruppe.

Das Verfahren 300 dient zur Überspannungsbegrenzung an einer elektrischen Baugruppe, beispielsweise einer Baugruppe 120, wie in den Figuren 1 und 2 dargestellt, die über einen Leistungsschalter Q1 an einen Versorgungsspannungsanschluss 110 schaltbar ist, wobei die Schutzschaltung 100, 200 einen Bipolartransistor Q3 mit einer Basis B, einem Emitter E und einem Kollektor C umfasst, wobei der Emitter E beim Betreiben der Schutzschaltung an den Versorgungsspannungsanschluss **110** und der Kollektor C an einen Steueranschluss G1 des Leistungsschalters Q1 geschaltet ist; und wobei die Schutzschaltung 100, 200 ein Schwellwertelement Z2 umfasst, das an die Basis B des Bipolartransistors Q3 geschaltet ist, und ausgebildet ist, beim Auftreten einer Überspannung an dem Versorgungsspannungsanschluss **110** stromleitend zu werden.

Das Verfahren 300 umfasst die folgenden Schritte: Verbinden 301 der Baugruppe 120 mit dem Versorgungsspannungsanschluss **110** mittels des Leistungsschalters Q1; und Trennen 302 der Baugruppe 120 von dem Versorgungsspannungsanschluss **110** beim Auftreten einer Überspannung an dem Versorgungsspannungsanschluss 110**,** bei dem das Schwellwertelement Z2 stromleitend wird, so dass der Bipolartransistor Q3 einen Basisstrom und damit auch einen Emitter-Kollektor-Strom führt, der den Steueranschluss G1 des Leistungsschalters Q1 ansteuert, die elektrische Baugruppe 120 von dem Versorgungsspannungsanschluss **110** zu trennen.

Das Verbinden 301 erfolgt in einem Normalbetriebszustand, in dem keine Überspannung an dem Versorgungsspannungsanschluss **110** vorliegt, so dass der Bipolartransistor Q3 keinen Basisstrom und damit auch keinen Emitter-Kollektor-Strom führt und somit keinen Einfluss auf den Leistungsschalter Q1 hat, wie oben zu Figur 1 beschrieben.

Ferner betrifft die Erfindung ein Computerprogramm zur Ausführung dieses Verfahrens 300 auf einem Computer bzw. einem Steuergerät.

## Patentansprüche

1. Schutzschaltung (100, 200) zur Überspannungsbegrenzung an einer elektrischen Baugruppe (120), die über einen Leistungsschalter (Q1) an einen Versorgungsspannungsanschluss (110) schaltbar ist, wobei die Schutzschaltung (100) folgendes umfasst:
einen Bipolartransistor (Q3), insbesondere einen Kleinsignal-Bipolartransistor, mit einer Basis (B), einem Emitter (E) und einem Kollektor (C), wobei der Emitter (E) beim Betreiben der Schutzschaltung an den Versorgungsspannungsanschluss (110) und der Kollektor (C) an einen Steueranschluss (G1) des Leistungsschalters (Q1) geschaltet ist; und
ein Schwellwertelement (Z2), das an die Basis (B) des Bipolartransistors (Q3) geschaltet ist, und ausgebildet ist, beim Auftreten einer Überspannung an dem Versorgungsspannungsanschluss (110) stromleitend zu werden, so dass der Bipolartransistor (Q3) einen Basisstrom und damit auch einen Emitter-Kollektor-Strom führt, der den Steueranschluss (G1) des Leistungsschalters (Q1) ansteuert, die elektrische Baugruppe (120) von dem Versorgungsspannungsanschluss (110) zu trennen.

2. Schutzschaltung (100, 200) nach Anspruch 1,
wobei der Bipolar-Transistor ein PNP-Transistor ist.

3. Schutzschaltung (100, 200) nach Anspruch 1 oder 2,
wobei in einem Normalbetrieb, in dem keine Überspannung an dem Versorgungsspannungsanschluss (110) vorliegt, der Bipoltransistor (Q3) keinen Basisstrom und damit auch keinen Emitter-Kollektor-Strom führt und somit keinen Einfluss auf den Leistungsschalter (Q1) hat.

4. Schutzschaltung (100, 200) nach einem der vorstehenden Ansprüche,
wobei das Schwellwertelement (Z2) eine Zener-Diode ist, wobei eine Durchbruchsspannung der Zener-Diode eine Spannungsschwelle bestimmt, welche ein Auftreten der Überspannung festlegt.

5. Schutzschaltung (100, 200) nach einem der vorstehenden Ansprüche, mit:
einem Schutzwiderstand (R2), der zwischen das Schwellwertelement (Z2) und die Basis (B) des Bipolartransistors (Q3) geschaltet ist,
wobei der Schutzwiderstand (R2) ausgebildet ist, die Basis (B) vor einem Überstrom zu schützen.

6. Schutzschaltung (100, 200) nach einem der vorstehenden Ansprüche, mit:
einer Einschaltstrombegrenzungsschaltung (Q1, R1, C1, Q2, Z1), die ausgebildet ist, beim Verbinden der elektrischen Baugruppe (120) mit dem Versorgungsspannungsanschluss (110) über den Leistungsschalter (Q1) einen Einschaltstrom entsprechend einer Zeitkonstante zu begrenzen.

7. Schutzschaltung (100, 200) nach Anspruch 6,
wobei die Einschaltstrombegrenzungsschaltung (Q1, R1, C1, Q2, Z1) den Leistungsschalter (Q1) umfasst sowie einen ersten Widerstand (R1) und einen ersten Kondensator (C1), aus denen sich die Zeitkonstante bestimmt, umfasst.

8. Schutzschaltung (100, 200) nach Anspruch 7,
wobei der erste Kondensator (C1) beim Betreiben der Schutzschaltung zwischen den Versorgungsspannungsanschluss (110) und den Steueranschluss (G) des Leistungsschalters (Q1) geschaltet ist; und
wobei der erste Widerstand (R1) beim Betreiben der Schutzschaltung zwischen den Steueranschluss (G) des Leistungsschalters (Q1) und einen Referenzspannungsanschluss (130) geschaltet ist.

9. Schutzschaltung (100, 200) nach Anspruch 8, mit:
einem zweiten Kondensator (C2), der beim Betreiben der Schutzschaltung zwischen die Baugruppe (120) und den Referenzspannungsanschluss (130) geschaltet ist;
wobei die Einschaltstrombegrenzungsschaltung (Q1, R1, C1, Q2, Z1) ausgebildet ist, den zweiten Kondensator (C2) beim Verbinden der elektrischen Baugruppe (120) mit dem Versorgungsspannungsanschluss (110) über den Leistungsschalter (Q1) mit einem begrenzten Eingangsstrom zu laden.

10. Schutzschaltung (100, 200) nach Anspruch 9,
wobei die Einschaltstrombegrenzungsschaltung (Q1, R1, C1, Q2, Z1) ausgebildet ist, beim Verbinden der elektrischen Baugruppe (120) mit dem Versorgungsspannungsanschluss (110) über den Leistungsschalter (Q1) einen Stromfluss durch den ersten Widerstand (R1) zuzulassen, so dass eine über dem ersten Kondensator (C1) abfallende Spannung mit der Zeitkonstante ansteigt und den Steueranschluss (G1) des Leistungsschalters (Q1) veranlasst, den Leistungsschalter (Q1) zu öffnen.

11. Schutzschaltung (100, 200) nach einem der Ansprüche 7 bis 10,
wobei die Einschaltstrombegrenzungsschaltung (Q1, R1, C1, Q2, Z1) einen Halbleiterschalter (Q2) umfasst, der zwischen den ersten Widerstand (R1) und den Referenzspannungsanschluss (130) geschaltet ist;
wobei der Halbleiterschalter (Q2) ausgebildet ist, die Einschaltstrombegrenzungsschaltung (Q1, R1, C1, Q2, Z1) zu aktivieren.

12. Schutzschaltung (100, 200) nach einem der Ansprüche 7 bis 11,
wobei die Einschaltstrombegrenzungsschaltung (Q1, R1, C1, Q2, Z1) eine Zenerdiode (Z1) umfasst, die parallel zu dem ersten Kondensator (C1) geschaltet ist;
wobei die Zenerdiode (Z1) ausgebildet ist, einen Spannungsabfall zwischen dem Versorgungsspannungsanschluss (110) und dem Steueranschluss (G1) des Leistungsschalters (Q1) zu begrenzen.

13. Schutzschaltung (200) nach einem der vorstehenden Ansprüche, mit:
einem Strombegrenzungselement (D1, D2, R3), das zwischen den Versorgungsspannungsanschluss (110) und den Bipolartransistor (Q3) geschaltet ist, und ausgebildet ist, einen Basisstrom sowie einen Emitterstrom an dem Bipolartransistor (Q3) zu begrenzen.

14. Schutzschaltung (200) nach Anspruch 13,
wobei das Strombegrenzungselement (D1, D2, R3) folgendes umfasst:
mehrere in Serie geschaltete Dioden (D1, D2), die zwischen den Versorgungsspannungsanschluss (110) und die Basis (B) des Bipolartransistors (Q3) geschaltet sind; und
einen Widerstand (R3), der zwischen den Versorgungsspannungsanschluss (110) und den Emitter (E) des Bipolartransistors (Q3) geschaltet ist.

15. Schutzschaltung (100, 200) nach einem der vorstehenden Ansprüche,
die ausgebildet ist, an einen Eingang oder einen Ausgang der elektrischen Baugruppe (120) geschaltet zu werden oder an weitere Schaltkreise innerhalb der Baugruppe (120).

16. Verfahren (300) zur Überspannungsbegrenzung an einer elektrischen Baugruppe (120), die über einen Leistungsschalter (Q1) an einen Versorgungsspannungsanschluss (110) schaltbar ist, wobei die Schutzschaltung (100, 200) einen Bipolartransistor (Q3), insbesondere einen Kleinsignal-Bipolartransistor, mit einer Basis (B), einem Emitter (E) und einem Kollektor (C) umfasst, wobei der Emitter (E) beim Betreiben der Schutzschaltung an den Versorgungsspannungsanschluss (110) und der Kollektor (C) an einen Steueranschluss (G1) des Leistungsschalters (Q1) geschaltet ist; und wobei die Schutzschaltung (100) ein Schwellwertelement (Z2) umfasst, das an die Basis (B) des Bipolartransistors (Q3) geschaltet ist, und ausgebildet ist, beim Auftreten einer Überspannung an dem Versorgungsspannungsanschluss (110) stromleitend zu werden; wobei das Verfahren folgende Schritte umfasst:
Verbinden (301) der Baugruppe (120) mit dem Versorgungsspannungsanschluss (110) mittels des Leistungsschalters (Q1); und
Trennen (302) der Baugruppe (120) von dem Versorgungsspannungsanschluss (110) beim Auftreten einer Überspannung an dem Versorgungsspannungsanschluss (110), bei dem das Schwellwertelement (Z2) stromleitend wird, so dass der Bipolartransistor (Q3) einen Basisstrom und damit auch einen Emitter-Kollektor-Strom führt, der den Steueranschluss (G1) des Leistungsschalters (Q1) ansteuert, die elektrische Baugruppe (120) von dem Versorgungsspannungsanschluss (110) zu trennen.

17. Verfahren (300) nach Anspruch 16,
wobei das Verbinden (301) in einem Normalbetriebszustand erfolgt, in dem keine Überspannung an dem Versorgungsspannungsanschluss (110) vorliegt, so dass der Bipolartransistor (Q3) keinen Basisstrom und damit auch keinen Emitter-Kollektor-Strom führt und somit keinen Einfluss auf den Leistungsschalter (Q1) hat.

18. Fahrzeug, insbesondere Flurförderzeug, mit:
zumindest einer elektrischen Baugruppe; und
einer Schutzschaltung (100) gemäß einem der Ansprüche 1 bis 15 zur Überspannungsbegrenzung an der zumindest einen elektrischen Baugruppe (120).
